Europäisches Patentamt

(19) European Patent Office

Office européen des brevets

(11) Numéro de publication: **0 086 124**
**B1**

(12) **FASCICULE DE BREVET EUROPEEN**

(45) Date de publication du fascicule du brevet:
04.12.85

(21) Numéro de dépôt: 83400121.6

(22) Date de dépôt: 19.01.83

(51) Int. Cl.⁴: **H 04 N 5/38**

(54) Système de correction de non linéarités par prémodulation en fréquences intermédiaires dans un équipement de télévision.

(30) Priorité: 28.01.82 FR 8201354

(43) Date de publication de la demande:
17.08.83 Bulletin 83/33

(45) Mention de la délivrance du brevet:
04.12.85 Bulletin 85/49

(84) Etats contractants désignés:
AT CH DE GB IT LI SE

(56) Documents cités:
FR - A - 2 299 759
US - A - 3 628 162
US - A - 4 249 214

TELECOMMUNICATION AND RADIO ENGINEERING,
vol. 29/30, no. 11, novembre 1975, Washington, US, M.M.
KOZLOVSKIY et al.: "Correction of phase distortion in a
TV transmitter at radio frequencies"
ELECTRICAL COMMUNICATION, vol. 48, no. 4, 1973,
Londres, GB, J. IRMER et al.: "20 KW UHF Television
transmitter with all solid state driver for klystron
amplifiers"

(73) Titulaire: **THOMSON-LGT LABORATOIRE GENERAL
DES TELECOMMUNICATIONS, 51, boulevard de la
République, F-78400 Chatou (FR)**

(72) Inventeur: **Cluniat, Claude, THOMSON-CSF
SCPI 173, bld Haussmann, F-75379 Paris Cedex 08 (FR)**

(74) Mandataire: **Turlèque, Clotilde et al, THOMSON-CSF
SCPI 173, Bld Haussmann, F-75379 Paris Cedex 08 (FR)**

## Description

L'invention se rapporte aux équipements de transmission de signaux de télévision et plus particulièrement à un système de correction de non linéarités par prémodulation en fréquences intermédiaires.

Dans les équipements d'émission ou de réemission de signaux de télévision en voie commune (où les composantes image et son sont amplifiées simultanément dans un même amplificateur de puissance), il est actuellement prévu de réduire considérablement les non-linéarités d'amplitude du signal amplifié par l'amplificateur en précorrigeant le signal au moyen d'un générateur de non linéarités réalisant une prémodulation d'amplitude du signal haute fréquence à émettre, avant amplification. Lors de l'amplification, les non linéarités générées par l'amplificateur sont compensées par les non linéarités générées par le générateur de non linéarités. Ce dispositif de correction permet d'obtenir de très bons résultats, l'intermodulation étant améliorée de 12 à 14 décibels. Ce même dispositif permet également une diminution de 12% de la transmodulation (ou cross-modulation dans la littérature technique anglo-saxonne), la transmodulation étant le transfert de la modulation d'amplitude de la composante d'image sur la porteuse son. Mais, les minima d'intermodulation et de transmodulation ne sont généralement pas obtenus dans les mêmes conditions. Il n'est donc pas possible à partir de ce seul dispositif de correction de minimiser simultanément l'intermodulation et la transmodulation.

De plus, la non linéarité de l'amplificateur de puissance commun produit également d'autres défauts sur les différentes porteuses qui ne peuvent pas être corrigés par ce dispositif. C'est le cas par exemple de distorsions d'amplitude du type tassement des impulsions de synchronisation sur la porteuse image; c'est également le cas des variations de gain différentiel à la fréquence de la sous-porteuse de chrominance. Enfin il existe également d'autres défauts non corrigés du type phase incidencielle, c'est-à-dire modulation de phase de la porteuse image en fonction de son niveau de modulation, c'est-à-dire du niveau du signal vidéofréquence.

Comme indiqué ci-dessus, ces défauts ont en commun le fait qu'ils se produisent à des fréquences données du spectre du signal composite et sont fonction du signal vidéofréquence.

Par ailleurs, l'amplificateur de puissance commun introduit des non linéarités de phase du fait de la non linéarité de sa caractéristique phase-fréquence. Dans les équipements de télévision, il est également prévu de corriger ces non linéarités au moyen de dispositifs correcteurs de phase différentielle, placés dans les étages à fréquence intermédiaire, qui sont normalement prévus pour ne pas introduire de distorsions d'amplitude. La demande de brevet n° 74 35448 (FR-A-2 299 759), décrit un tel dispositif correcteur de phase différentielle constitué de cellules de correction qui permettent d'introduire, autour de pôles à fréquences sélectionnées par le dispositif correcteur, un décalage de phase variable sans affecter l'amplitude du signal. Un tel dispositif permet de corriger, par exemple, les distorsions de phase introduites sur la sous porteuse de chrominance par le signal de luminance.

L'invention a pour objet un système de correction des non linéarités résiduelles d'amplitude ou de phase des différentes porteuses formant le signal composite, par prémodulation de certains paramètres variant de manière indépendante dans les cellules de correction initalement prévues pour la correction de phase différentielle et placées dans les étages à fréquence intermédiaire, au moyen de circuits de commande supplémentaires de ces paramètres.

Les défauts résiduels susceptibles d'être corrigés par ce système sont en particulier la transmodulation résiduelle à la fréquence de la porteuse son, le tassement des impulsions de synchronisation ligne à la fréquence de la porteuse image, les variations de la valeur moyenne de la porteuse son et les variations de niveau de la sous-porteuse de chrominance pour régler le gain différentiel. La phase incidencielle, c'est-à-dire la modulation de phase de la porteuse en fonction du niveau du signal vidéofréquence, peut également être corrigée par ce système.

En effet, du fait de la constitution des cellules de correction, leur gain, leur fréquence et leur temps de retard de groupe peuvent être commandés indépendamment et un système de correction à plusieurs cellules accordées sur des pôles différents permet de mettre en œuvre des asservissements de ces corrections en fonction de signaux de commande prélevés dans le signal vidéofréquence.

Suivant l'invention, un système de correction de non linéarités par prémodulation en fréquences intermédiaires, pour la précorrection des non linéarités introduites sur un signal de télévision amplifié à haute fréquence dans un équipement de transmission en voie commune, comportant au moins une cellule de correction de temps de retard de groupe placée dans les étages à fréquence intermédiaire, la cellule comportant une voie compensée comportant un amplificateur relié à circuit de modulation de temps de retard de groups ayant une entrée de commande de temps de retard et accordé à la fréquence d'un pôle de correction par un circuit oscillant, ce circuit n'affectant pas l'amplitude du signal à la fréquence du pôle de correction, est caractérisé en ce que la cellule comporte en outre un circuit de commande de prémodulation ayant une entrée de commande et dont la sortie est couplée à l'amplificateur pour commander des corrections d'amplitude, à la fréquence du pôle de correction, indépendantes de la correction de temps de retard de groups introduite à la même fréqence.

L'invention sera mieux comprise et d'autres caractéristiques apparaîtront à l'aide de la description qui suit en référence aux figures annexées:

— la figure 1 est un schéma synoptique d'un premier mode de réalisation du système de correction suivant l'invention, appliqué à la correction de la transmodulation.
— la figure 2 est un schéma détaillé d'un mode de réalisation de la cellule de correction utilisée dans le système de correction suivant l'invention.
— la figure 3 est un diagramme de signaux explicatif.
— la figure 4 est un schéma synoptique d'un second mode de réalisation du système de correction suivant l'invention, appliqué à la correction de phase incidencielle.
— la figure 5 est un schéma synoptique d'un troisième mode de réalisation du système de correction suivant l'invention, appliqué à la correction de valeur moyenne de la porteuse son.

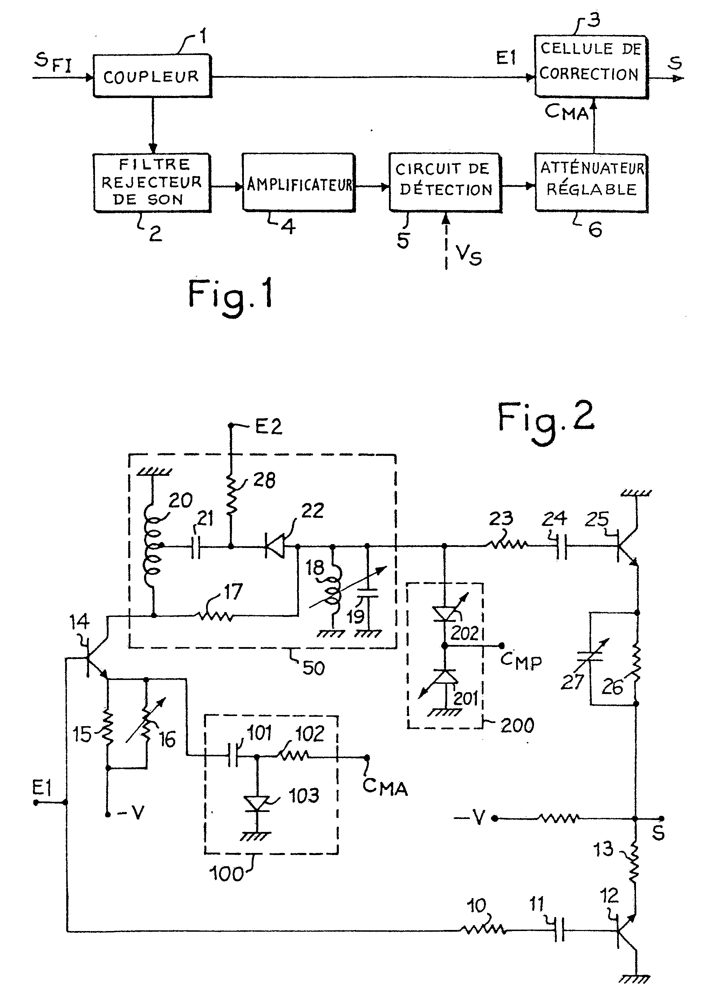

Sur la figure 1, qui représente un premier mode de réalisation d'un système de correction, appliqué à la correction de la transmodulation résiduelle, un signal de télévision à fréquence intermédiaire composite, image et son, $S_{FI}$ est appliqué à l'entrée d'un coupleur 1 qui prélève une partie de ce signal pour la transmettre à l'entrée d'un filtre rejecteur de son 2 dont la sortie délivre un signal à fréquence intermédiaire qui ne contient plus que les composantes d'image. La sortie principale du coupleur 1 est reliée à l'entrée de signal $E_1$ d'une cellule de correction 3. Cette cellule de correction a une entrée de commande de prémodulation d'amplitude $C_{MA}$ à laquelle est appliqué un signal de commande obtenu à partir du signal image de la manière suivante: La sortie du filtre réjecteur de son 2 est reliée à l'entrée d'un amplificateur 4 dont la sortie est reliée à l'entrée d'un circuit de détection 5. Ce circuit de détection transmet à sa sortie le signal vidéofréquence image détecté. La sortie de ce circuit de détection est reliée d'un atténuateur réglable 6 qui fixe l'efficacité de la correction par le niveau du signal vidéofréquence image appliqué à l'entrée de commande de la cellule de correction 3. La cellule de correction est telle que son gain n'est modifié qu'autour d'une fréquence dite fréquence d'accord de la cellule.

Un schéma détaillé d'un mode de réalisation de la cellule de correction 3 est représenté sur la figure 2. Une partie des éléments essentiels de cette cellule sont identiques à ceux de la cellule de correction de temps de propagation de groupe décrite dans la demande de brevet N° 74 35448 au nom du demandeur, pour un dispositif correcteur de phase différentielle.

En particulier, l'entrée $E_1$ de cette cellule est reliée à sortie S par deux voies parallèles, une voie directe et une voie compensée. Cette cellule se différencie des cellules de correction de temps de groupe classiques par le fait que la transmittance du circuit de modulation de la voie compensée est constante à la fréquence d'accord, quel que soit le temps de retard de groupe. Ainsi la correction de temps de retard de groupe peut être réalisée de façon indépendante sans réajustement correspondant de l'amplitude. La voie directe comporte principalement une résistance 10 et une capacité 11 en série dans le circuit de base d'un transistor NRN 12 dont le collecteur est relié à la masse, et dont l'émetteur est couplé à sortie 5 par une résistance 13. Cette voie directe transmet donc sans les modifier toutes les composantes (image et son) du signal composite à fréquence intermédiaire appliqué à l'entrée $E_1$.

La voie compensée comporte un transistor amplificateur NPN 14 dont la base est reliée à l'entrée $E_1$, dont l'émetteur est couplé à la masse par un circuit à résistance 15 et potentiomètre 16 permettant d'ajuster la résistance dans le circuit d'émetteur. Ce transistor constitue un générateur à impédance constante pour le circuit de correction et un séparateur vis à vis de l'impédance d'entrée. Le collecteur du transistor 14 est couplé au circuit de modulation du temps de retard de groupe 50, comportant une résistance 17 reliée à une borne d'un circuit oscillant accordable à bobine d'inductance 18 et capacité 19. Ce circuit de modulation comporte en outre un autotransformateur 20, disposé entre le collecteur du transistor 14 et la masse, dont le point milieu est relié par un condensateur 21 et une diode PIN 22 à la borne commune au circuit oscillant et à la résistance 17. Cette même borne est couplée à la sortie S de la cellule de correction par une résistance 23 en série avec un condensateur 24, la jonction base émetteur d'un transistor NPN 25 et une résistance 26, le collecteur du transistor étant relié à la masse. Un condensateur ajustable 27 en parallèle sur la résistance 26 permet d'ajuster la phase entre la voie directe et la voie compensée. Les transistor 12 et 25 forment un sommateur à haute impédance d'entrée. Dans la description ci-dessus, les résistances de polarisation de base des transistors et les condensateurs de découplage n'ont pas été représentés.

Dans la cellule de correction décrite ci-dessus, utilisée pour la correction de phase différentielle, le courant dans la diode PIN 22 est modulé par une entrée de commande $E_2$ reliée par une résistance 28 à la cathode de cette diode, la résistance de cette diode PIN, variable avec ce courant, entrainant une modification du coeffecient de surtension donc de la pente de la caractéristique phase-fréquence à la fréquence d'accord, cette pente étant le temps de retard de groupe, le gain de cette cellule étant inchangé.

Si le gain de cette cellule peut être, maintenu constant dans le cadre d'une correction de phase différentielle, il peut également être rendu variable sans affecter la phase.

Dans le système de correction suivant l'invention, pour une correction d'amplitude sélective en fréquence, une prémodulation d'amplitude fonction du signal perturbateur est appliquée, à la fréquence sélectionnée par le circuit oscillant, par variation du courant dans l'émetteur du transistor 14. Pour cela la cellule de correction comporte en outre, entre l'entrée de commande de prémodulation d'amplitude $C_{MA}$ et l'émetteur du transistor 14, un circuit 100 de commande de prémodulation d'amplitude comportant une résistance 101 et un condensateur 102, le point commun à ces deux éléments étant relié à l'anode d'une diode PIN 103 dont la cathode est reliée à la masse. Ainsi, le gain de la cellule de correction de temps de retard de groupe est augmenté, à la fréquence d'accord de cette cellule, dans un rapport défini par réglage de l'efficacité de correction par l'atténuateur réglable 6, figure 1.

Pour la correction de la transmodulation, la cellule de correction de temps de retard de groupe, accordée à la fréquence de la porteuse son en fréquence intermédiaire par le circuit oscillant, réalise une expansion d'amplitude de cette porteuse son modulée en fréquence, fonction du signal vidéofréquence appliqué à l'entrée de commande $C_{MA}$, le défaut de transmodulation introduit par l'étage de puissance étant une compression du son fonction du signal vidéofréquence.

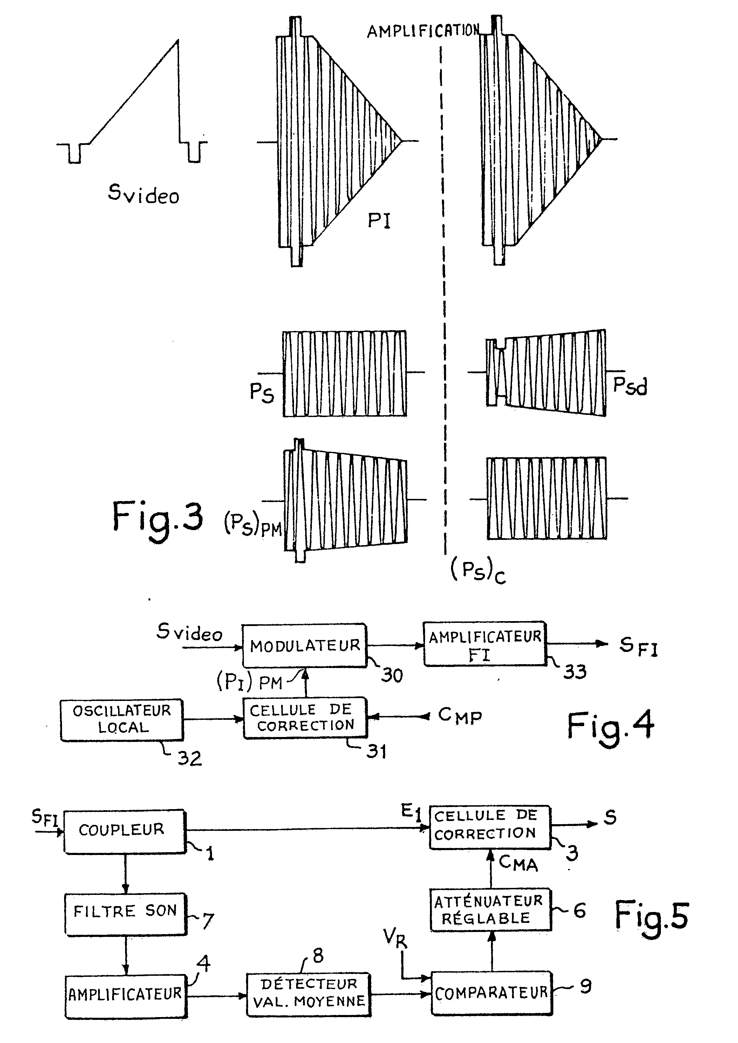

La figure 3 représente un diagramme de signaux permettant d'illustrer la distorsion d'intermodulation et la correction de cette distorsion par prémodulation sélective à la fréquence de la porteuse son.

Sur la première ligne de ce diagramme a été représenté un signal vidéofréquence image constitué d'impulsions de synchronisation et d'une rampe de luminance, Svidéo, puis l'enveloppe de la porteuse image $P_I$ modulée en amplitude avant et après amplification de puissance.

Sur la seconde ligne de ce diagramme a été représentée la porteuse son, avant et après amplification, lorsqu'il n'y a pas de correction d'intermodulation. Du fait de l'amplification commune image et son, la porteuse son $P_S$ est modulée en amplitude par le signal image et donne une porteuse son distordue $(P_S)_d$ par compression proportionnelle à l'amplitude du signal vidéofréquence image. Pour la correction d'intermodulation, la cellule réalise une prémodulation de la porteuse son par expansion proportionnelle à l'amplitude du signal vidéofréquence $(P_S)_{PM}$, porteuse son prémodulée, de telle sorte que, après amplification, la porteuse son soit corrigée de l'intermodulation $(P_S)_C$; $(P_S)_{PM}$ et $(P_S)_C$ ont été représentées sur la dernière ligne du diagramme.

Une cellule semblable, comportant le même circuit de commande, mais accordée à la fréquence porteuse image permet la correction des distorsions d'amplitude de cette porteuse non corrigées par d'autres dispositifs de correction, et, par exemple la correction de la compression des impulsions de synchronisation. Pour cela, le signal appliqué à l'entrée de commande $C_{MA}$ de la cellule accordée à la porteuse image est constitué des impulsions de synchronisation, le circuit de détection 5 étant pourvu d'une $V_S$ (en pointillés sur la figure 1) permettant de fixer un seuil au delà duquel le signal détecté est transmis. Le gain de la cellule est alors augmenté seulement pour les impulsions de synchronisation, la tension de seuil $V_S$ étant fixée pour que ces impulsions soient seules transmises par le circuit de détection.

De même, une cellule semblable accordée à la fréquence de la sous-porteuse de chrominance permet d'effectuer une précorrection de gain différentiel dont la forme est définie par le signal de modulation vidéofréquence appliqué à l'entrée de commande de modulation $C_{MA}$.

La figure 4 représente un second mode de réalisation du système de correction suivant l'invention appliqué à la correction de phase incidencielle. Cette correction est appliquée à la porteuse image issue de l'oscillateur local à fréquence intermédiaire pour rattraper les décalages de phase de cette porteuse, dûs au signal vidéofréquence de modulation, par une prémodulation de la phase de cette porteuse. Pour cela le modulateur 30 reçoit le signal vidéo, Svidéo, et cette porteuse prémodulée en phase $(P_I)_{PM}$ issue d'une cellule de correction 31 qui reçoit sur son entrée de signal la porteuse à fréquence intermédiaire FI d'un oscillateur local 32 et un signal de commande de prémodulation de phase $C_{MP}$ dérivé du signal vidéofréquence après atténuation. Le signal modulé en fréquence intermédiaire disponible à la sortie du modulateur est alors amplifié dans l'amplificateur à fréquence intermédiaire 33 qui fournit le signal $S_{FI}$. Le signal de commande $C_{MP}$ peut être directement dérivé du signal vidéo d'entrée Svidéo pour une précorrection ou être dérivé du signal vidéofréquence détecté après amplification par l'étage de puissance pour un système de correction automatique. La cellule de correction utilisée dans ce système est la cellule décrite ci-dessus en référence à la figure 2 sans le circuit de commande de prémodulation d'amplitude 100, mais avec un circuit de commande de prémodulation de phase 200, également représenté sur la figure 2, qui permet de faire varier les conditions d'accord du circuit oscillant 18, 19. Ce circuit comporte des diodes varactors, tête bêche 201 et 202, en parallèle sur le circuit oscillant dont les cathodes sont reliées de commande $C_{MA}$ pour faire varier la capacité et donc la fréquence d'accord du circuit oscillant. Dans ce cas le gain de la cellule n'est pas modifié mais le décalage de la caractéristique sur l'axe des fréquences entraine une modulation de phase qui compense la phase incidencielle.

D'une manière plus générale, un système de correction mettant en oeuvre plusieurs cellules accordées sur des fréquences de porteuses différentes permet d'agir indépendamment sur le temps de retard de groupe, l'amplitude, et la phase de chacune de ces porteuses et de mettre en oeuvre pour chacune d'elle et pour chacun de ces paramètres un asservissement de la correction. Actuellement les équipement d'émission et de réémission mettent en oeuvre plusieurs cellules de correction de temps de retard de groupe, dont les pôles sont répartis dans la bande de fréquence, afin de linéariser la phase et de rendre constant le temps de retard de groupe dans l'ensemble de la bande de transmission.

A partir de ces cellules, il est possible de corriger les différents défauts résiduels énoncés ci-dessus, sélectivement pour chacun des signaux porteurs constituant le signal composite.

Par exemple, pour la porteuse son, il a été décrit ci-dessus un système de correction agissant sur la transmodulation, par correction fonction du niveau du signal vidéofréquence image. La même cellule de correction permet également de maintenir la valeur moyenne de la porteuse son à son niveau nominal. Dans ce cas, le signal de commande appliqué à l'entrée de prémodulation d'amplitude de la cellule de correction accordée à la fréquence de la porteuse son est un signal d'erreur caractéristique de l'écart entre la valeur moyenne détectée et la valeur moyenne nominale de cette porteuse.

Pour cela le système de correction représenté sur la figure 5 comporte, relié à l'entrée à fréquence intermédiaire $S_{FI}$ un coupleur 1 dont la sortie principale est reliée à l'entrée $E_1$ de la cellule de correction 3, et dont l'autre sortie est reliée à l'entrée d'un filtre passe bande 7 filtrant la porteuse son, la sortie de ce filtre étant reliée à l'entrée de l'amplificateur 4; la sortie de cet amplificateur est reliée à un circuit détecteur de valeur moyenne 8, dont la sortie est reliée à la première entrée d'un comparateur 9, la seconde entrée de ce comparateur recevant un signal de référence $V_R$, caractéristique de la valeur moyenne nominale de la porteuse son. La sortie de ce comparateur 9 est reliée à l'atténuateur réglable 6 qui fournit le signal de commande de modulation d'amplitude $C_{MA}$ à la cellule de correction.

Dans un système automatique, la régulation de la valeur moyenne de la porteuse son permet de maintenir le rapport image-son à la valeur nominale prévue lors de l'émission, ceci étant particulièrement utile dans les réémetteurs lorsque ce rapport à été modifié du fait des conditions de propagation entre l'émetteur et le réemetteur.

**Revendications**

1. Système de correction de non linéarités par prémodulation en fréquences intermédiaires, pour la précorrection des non linéarités introduites sur un signal de télévision amplifié à haute fréquence dans un équipement de transmission en voie commune, comportant au moins une cellule (3) de correction de temps de retard de groupe placée dans les étages à fréquence intermédiaire, la cellule comportant une voie directe et une voie compensée dont les signaux sont additionnés, la voie compensée comportant un amplificateur (14) relié à un circuit de modulation de temps de retard de groupe (50) ayant une entrée ($E_2$) de commande de temps de retard de groupe et accordé à la fréquence d'un pôle de correction par un circuit oscillant (18, 19), ce circuit n'affectant pas l'amplitude du signal à la fréquence du pôle de correction, caractérisé en ce que la cellule comporte en outre un circuit de commande de prémodulation d'amplitude (100) ayant une entrée de commande ($C_{MA}$) et dont la sortie est couplée à l'amplificateur (14) pour commander des corrections d'amplitude, à la fréquence du pôle de correction, indépendantes de la correction de temps de retard de groupe introduite à la même fréquence.

2. Système selon la revendication 1, caractérisé en ce que pour une correction d'amplitude de la porteuse son en fréquence intermédiaire, ce système comporte une cellule accordée à cette fréquence recevant le signal à fréquence intermédiaire modulé, l'entrée de commande de prémodulation d'amplitude ($C_{MA}$) de cette cellule recevant un signal issu du signal vidéofréquence.

3. Système selon la revendication 2, caractérisé en ce que, pour une correction de transmodulation, le système comporte un coupleur (1) pour prélever une partie du signal composite à fréquence intermédiaire, un filtre réjecteur de son (2) couplé à un circuit de détection (5) du signal vidéofréquence image dont la sortie est couplée à l'entrée de commande de prémodulation d'amplitude.

4. Système selon la revendication 1, caractérisé en ce que, pour une correction de valeur moyenne de la porteuse son, le système comporte un coupleur (1) pour prélever une partie du signal composite à fréquence intermédiaire, un filtre de son (7), un circuit de détection (8) de la valeur moyenne de la porteuse son, dont la sortie est couplée à une entrée d'un circuit de comparaison (9) dont la seconde entrée reçoit un signal caractéristique de la valeur nominale de la porteuse son, la sortie de ce circuit de comparaison étant couplée à l'entrée de commande de prémodulation d'amplitude.

5. Système selon la revendication 1, caractérisé en ce que, pour une correction d'amplitude de la porteuse image en fréquence intermédiaire, ce système comporte une cellule accordée à cette fréquence dont l'entrée de commande de prémodulation d'amplitude ($C_{MA}$) reçoit un signal issu du signal vidéofréquence, le système comportant à cet effet un coupleur (1) pour prélever une partie du signal composite à fréquences intermédiaires, un filtre rejecteur de son (2), couplé à un circuit de détection (5) de signal vidéofréquence dont la sortie est couplée à l'entrée de commande de prémodulation d'amplitude.

6. Système selon la revendication 5, caractérisé en ce que, pour une correction du tassement des impulsions de synchronisation, à la fréquence porteuse image, le circuit de détection (5) sélectionne, dans le signal vidéofréquence image détecté, les impulsions de synchronisation.

7. Système selon la revendication 1, caractérisé en ce que la cellule comporte en outre un circuit de commande de prémodulation de phase (200), couplé au circuit oscillant (18, 19) pour faire varier la fréquence du pôle de correction.

8. Système selon la revendication 7, caractérisé en ce que, pour une correction de phase incidencielle à la fréquence de la porteuse image en fréquence intermédiaire, le système comporte une cellule (3) accordée à cette fréquence recevant la porteuse image en fréquence intermédiaire non modulée d'un oscillateur à fréquence intermédiaire (32), l'entrée de commande de prémodulation ($C_{MP}$) de cette cellule recevant un signal issu du signal vidéofréquence de modulation, la sortie de la cellule de correction étant reliée à l'entrée de signal porteur d'un modulateur à fréquence intermédiaire (30).

9. Système de correction de non linéarités par prémodulation en fréquences intermédiaires selon l'une quelconque des revendications précédentes, caractérisé en ce qu'il comporte plusieurs cellules de correction de temps de retard de groupe accordées à des fréquences différentes, ces cellules ayant, en plus de l'entrée de commande ($E_2$) de temps de retard de groupe, et du circuit de modulation (50) correspondant, une entrée de commande de prémodulation d'amplitude ($C_{MA}$) et un circuit de commande d'amplitude (100) associé, et une entrée de commande de prémodulation de phase ($C_{MP}$) et un circuit de commande de phase (200) associé.

**Patentansprüche**

1. System zur Korrektur der Nichtlinearität durch Zwischenfrequenz-Vormodulation, für die Vorkorrektur der Nichtlinearitäten, die in ein verstärktes Hochfrequenz-Fernsehsignal in einer Einrichtung zur Übertragung in gemeinsamem Kanal eingeführt werden, mit mindestens einer Zelle (3) zur Gruppenlaufzeitkorrektur in den Zwischenfrequenzstufen, wobei diese Zelle einen direkten und einen kompensierten Kanal besitzt, deren Signale addiert werden, und wobei der kompensierte Kanal eine Verstärker (14) enthält, der an einen Gruppenlaufzeit-Modulationskreis (50) angeschlossen ist, wobei dieser Kreis einen Eingang ($E_2$) zur Steuerung der Gruppenlaufzeit besitzt und auf die Frequenz eines Korrekturpols über einen Schwingkreis (18, 19) abgestimmt ist sowie die Amplitude des Signals bei der Frequenz des Korrekturpols nicht beeinflußt, dadurch gekennzeichnet, daß die Zelle außerdem einen Kreis (100) zur Steuerung der Amplituden-Vormodulation mit einem Steuereingang ($C_{MA}$) und einem an den Verstärker (14) gekoppelten Ausgang besitzt, um Amplitudenkorrekturen bei der Frequenz des Korrekturpols unabhängig von der bei derselben Frequenz eingeführten Gruppenlaufzeitkorrektur zu steuern.

2. System nach Anspruch 1, dadurch gekennzeichnet, daß für eine Amplitudenkorrektur des Trägers des Tonsignals im Zwischenfrequenzbereich dieses System eine auf diese Zwischenfrequenz abgestimmte Zelle besitzt, die das modulierte Zwischenfrequenzsignal zugeführt erhält, wobei der Steuereingang für die Amplituden-Vormodulation ($C_{MA}$) dieser Zelle ein Signal zugeführt erhält, das vom Videofrequenzsignal stammt.

3. System nach Anspruch 2, dadurch gekennzeichnet, daß für eine Transmodulationskorrektur das System einen Koppler (1) zur Entnahme eines Teils des kombinierten Zwischenfrequenzsignals und ein Filter (2) aufweist, das das Tonsignal sperrt und an einen Detektorkreis (5) für das Videofrequenz-Bildsignal gekoppelt ist, wobei der Ausgang dieses Detektorkreises an den Eingang zur Steuerung der Amplituden-Vormodulation gekoppelt ist.

4. System nach Anspruch 1, dadurch gekennzeichnet, daß für eine Korrektur des mittleren Wertes des Tonsignal-Trägers das System einen Koppler (1) zur Entnahme eines Teils des kombinierten Zwischenfrequenzsignals und ein Tonsignalfilter (7) sowie einen Detektorschaltkreis (8) für den Mittelwert des Tonsignal-Trägers enthält, wobei der Ausgang dieses Detektorkreises (8) an den Eingang eines Komparatorkreises (9) gekoppelt ist, dessen zweiter Eingang ein für den Nennwert des Tonsignal-Trägers kennzeichnendes Signal zugeführt erhält, während der Ausgang dieses Komparatorkreises an den Steuereingang für die Amplitudenvormodulation gekoppelt ist.

5. System nach Anspruch 1, dadurch gekennzeichnet, daß für eine Korrektur der Amplitude des Bildsignalträgers im Zwischenfrequenzbereich dieses System eine auf diese Zwischenfrequenz abgestimmte Zelle enthält, deren Steuereingang für die Amplituden-Vormodulation ($C_{MA}$) ein Videofrequenzsignal stammendes Signal zugeführt erhält, und daß das System hierzu einen Koppler (1) zur Entnahme eines Teils des kombinierten Zwischenfrequenzsignals und ein Tonsignal-Sperrfilter (2) enthält, das an einen Detektorkreis (5) für das Videofrequenzsignal gekoppelt ist, wobei der Ausgang dieses Detektorkreises an den Steuereingang für die Amplituden-Vormodulation gekoppelt ist.

6. System nach Anspruch 5, dadurch gekennzeichnet, daß für eine Korrektur der Kompression der Synchronisationsimpulse bei der Bildsignal-Trägerfrequenz der Detektorschaltkreis (5) im entdeckten Videofrequenz-Bildsignal die Synchronisationsimpulse selektioniert.

7. System nach Anspruch 1, dadurch gekennzeichnet, daß die Zelle außerdem einen Kreis zur Steuerung der Phasenvormodulation (200) enthält, der an den Schwingkreis (18, 19) zur Änderung der Frequenz des Korrekturpols gekoppelt ist.

8. System nach Anspruch 7, dadurch gekennzeichnet, daß für eine Korrektur der einfallenden Phase bei der Frequenz des Bildträgers im Zwischenfrequenzbereich das System eine Zelle (3) besitzt, die auf diese Frequenz abgestimmt ist und den unmodulierten Bildträger im Zwischenfrequenzbereich von einem Zwischenfrequenzoszillator (32) zugeführt erhält und daß der Steuereingang für die Vormodulation ($C_{MP}$) dieser Zelle ein vom Videofrequenz-Modulationssignal stammendes Signal zugeführt erhält und der Ausgang der Korrekturzelle an den Trägersignaleingang eines Zwischenfrequenzmodulators (30) angeschlossen ist.

9. System zur Korrektur von Nichtlinearität durch Vormodulation im Zwischenfrequenzbereich nach einem der vorhergehenden Ansprüche, dadurch gekennzeichnet, daß es mehrere Korrekturzellen für die Gruppenlaufzeit besitzt, die auf unterschiedliche Frequenzen abgestimmt sind und außer dem Steuereingang ($E_2$) für die Gruppenlaufzeit und dem entsprechenden Modulationskreis (50) einen Eingang zur Steuerung der Amplituden-Vormodulation ($C_{MA}$) und einen zugeordneten Amplitudensteuerkreis (100) sowie einen Steuereingang für die Phasenvormodulation ($C_{MP}$) und einen zugeordneten Phasensteuerkreis (200) besitzen.

## Claims

1. A system for the correction of non-linearities by intermediate frequency pre-modulation, for pre-correcting non-linearities introduced into a high frequency amplified television signal in common channel transmission equipment, comprising at least one group delay time correction cell (3) placed in the intermediate frequency stages, the cell comprising a direct channel and a compensated channel whose signals are added, the compensated channel comprising an amplifier (14) connected to a group delay time modulation circuit (50) having a group delay time control input ($E_2$) and being tuned to the frequency of a correction pole by an oscillating circuit (18, 19), this circuit not affecting the amplitude of the signal at the frequency of the correction pole, characterized in that said cell further comprises an amplitude premodulation control circuit (100) with a control input ($C_{MA}$) and an output which is connected to the amplifier (14) for controlling amplitude corrections, at the frequency of the correction pole, independently of the group delay time correction introduced at that same frequency.

2. A system as claimed in claim 1, characterized in that, for an amplitude correction of the intermediate frequency sound carrier, this system comprises a cell tuned to this frequency and receiving the modulated intermediate frequency signal, the amplitude pre-modulation control input ($C_{MA}$) of this cell receiving a signal coming from the videofrequency signal.

3. A system as claimed in claim 2, characterized in that, for a cross-modulation correction, the system comprises a coupler (1) for taking a part of the composite intermediate frequency signal, and a sound rejector filter (2) coupled to a detection circuit (5) detecing the videofrequency image signal, the output of this circuit (5) being coupled to the amplitude pre-modulation control input.

4. A system as claimed in claim 1, characterized in that, for correcting the mean value of the sound carrier, the system comprises a coupler (1) for taking a part of the composite intermediate frequency signal, a sound filter (7), a circuit (8) for detecting the mean value of the sound carrier, whose output is coupled to an input of a comparison circuit (9) whose second input receives a signal characteristic of the nominal value of the sound carrier, the output of this comparison circuit being coupled to the amplitude pre-modulation control input.

5. A system as claimed in claim 1, characterized in that, for an amplitude correction of the intermediate frequency image carrier, this system comprises a cell tuned to this frequency whose amplitude pre-modulation control input ($C_{MA}$) receives a signal from the videofrequency signal, the system comprising for this a coupler (1) for taking a part of the composite intermediate frequency signal, a sound rejector filter (2) coupled to a videofrequency signal detection circuit (5) whose output is coupled to the amplitude pre-modulation control input.

6. A system as claimed in claim 5, characterized in that, for correcting compression of the sync pulses, at the image carrier frequency, the detection circuit (5) selects, from the detected image videofrequency signal, the sync pulses.

7. A system as claimed in claim 1, characterized in that the cell further comprises a phase pre-modulation control circuit (200) coupled to the oscillating circuit (18, 19) for varying the frequency of the correction pole.

8. A system as claimed in claim 7, characterized in that, for a correction of the incidental phase at the frequency of the image carrier in the intermediate frequency stages, the system comprises a cell (3) tuned to this frequency receiving the unmodulated intermediate frequency image carrier from an intermediate frequency oscillator (32), the pre-modulation control input ($C_{MP}$) of this cell receiving a signal from the modulation videofrequency signal, the output of the correction cell being connected to the carrier signal input of an intermediate frequency modulator (30).

9. A system for correcting non-linearities by intermediate frequency pre-modulation as claimed in any one of the preceding claims, characterized in that it comprises several group delay time correction cells tuned to different frequencies, these cells having, in addition to the group delay time control input ($E_2$) and the corresponding modulation circuit (50), an amplitude pre-modulation control input ($C_{MP}$) and an associated amplitude control circuit (100), and a phase pre-modulation control input ($C_{MP}$) and an associated phase control circuit (200).

0 086 124

Fig.1

Fig.2

0 086 124

Fig.3

Fig.4

Fig.5

11